Europäisches Patentamt

European Patent Office

Office européen des brevets

(19)

(11) Veröffentlichungsnummer : **0 096 916**
**B1**

(12) **EUROPÄISCHE PATENTSCHRIFT**

(45) Veröffentlichungstag der Patentschrift :
18.09.85

(21) Anmeldenummer : 83200769.4

(22) Anmeldetag : 31.05.83

(51) Int. Cl.⁴ : **F 22 B 37/28**, F 01 D 25/32,
B 01 D 45/16

(54) **Hochgeschwindigkeits-Wasserabscheider.**

(30) Priorität : 14.06.82 CH 3664/82

(43) Veröffentlichungstag der Anmeldung :
28.12.83 Patentblatt 83/52

(45) Bekanntmachung des Hinweises auf die Patenterteilung : 18.09.85 Patentblatt 85/38

(84) Benannte Vertragsstaaten :
AT CH DE FR LI NL SE

(56) Entgegenhaltungen :
CH-A- 440 330
CH-A- 621 490
DE-B- 1 255 090
FR-A- 321 682
GB-A- 393 552
GB-A- 409 988

(73) Patentinhaber : BBC Aktiengesellschaft Brown,
Boveri & Cie.
Haselstrasse
CH-5401 Baden (CH)

(72) Erfinder : Svoboda, Vaclan
Zürcherstrasse 35
CH-5400 Baden (CH)

Jouve, 18, rue St-Denis, 75001 Paris, France

### Beschreibung

Die Erfindung bezieht sich auf einen Hochgeschwindigkeits-Wasserabscheider in einer Dampfturbinenanlage, im wesentlichen bestehend aus einem zwischen einer Zuströmleitung und einer Abströmleitung angeordneten Rohrkniestück, das in seiner Knickebene eine Anzahl gestaffelter hohler Umlenkschaufeln mit gekrümmtem Profil aufweist, die an ihrer konkaven Seite Oeffnungen aufweisen und deren hohles Schaufelinnere mit einem das Rohrkniestück umgebenden Zwischenraum verbunden ist, welcher an eine Zone niedrigeren Druckes in der Anlage angeschlossen ist.

Wasserabscheider dieser Art werden verwendet um aus einer Dampfleitung das mit dem Dampf mitgetragene Wasser abzuscheiden. Dies ist insbesondere bei Dampfturbinenanlagen wichtig, in denen zu nasser Dampf im Niederdruckteil der Turbine infolge der Erosionswirkung schwere Schäden an den Turbinenschaufeln verursachen könnte.

Wasserabscheider der eingangs genannten Art sind beispielsweise aus den Patentschriften CH-440 330 und CH-621 490 bekannt. Bei diesen Lösungen wird das abgeschiedene Wasser durch Spalte an der Schaufelaustrittskante und/oder an der konkaven Seite der Schaufel abgesaugt. Dies kann den Nachteil aufweisen, dass bei grossem örtlichen oder zeitlichen Wasseranfall ein Teil des an den Umlenkschaufeln gebildeten Wasserfilmes abgerissen und mit dem Dampfstrom in die Turbine mitgezogen wird.

Der Erfindung liegt die Aufgabe zugrunde, einen hochwirksamen Wasserabscheider zu schaffen, mit dem gute Abscheidungsgrade bei allen Betriebszuständen einer Dampfturbinenanlage erreicht werden.

Erfindungsgemäss wird diese Aufgabe dadurch gelöst, dass die Oeffnungen reihenweise quer zur Strömungsrichtung angeordnete Bohrungen sind und mit einem sich über die ganze Reihe erstreckenden Deckband versehen sind, welches in der Ebene der Oeffnungen und stromaufwärts der Oeffnungen einen Abstand zur Schaufeloberfläche aufweist und welches stromabwärts der Oeffnungen mit der Schaufeloberfläche dampfdicht verbunden ist.

Dadurch, dass sich zwischen dem Deckband und der konkaven Seite der Umlenkschaufel ein Stauraum bildet, in welchem sich das abgeschiedene Wasser ansammelt, kann das Wasser durch die Absaugöffnungen sehr wirksam abgesaugt werden. Dies gilt sowohl bei stationären als auch instationären Betriebszuständen, d. h., sowohl bei einem gleichmässigen als auch einem örtlich oder zeitlich ungleichmässigen Wasseranfall an der konkaven Seite der Schaufel.

Wenn zur Absaugung des zwangsläufig in den Ecken zwischen der konkaven Seite der Schaufel und der Seitenwand des Rohrkniestücks gesammelten Wassers Spalte in der Seitenwand vorgesehen sind, wird die Gefahr des Mitreissens des Wasserfilmes in den Ecken vermindert. Falls vor der Schaufelreihe im Zuströmkanal ein Vorabscheider zum Abscheiden von Schwallwasser an den Kanalwänden angeordnet ist, wird eine gleichmässige Wasserverteilung an allen Schaufeln sowohl beim Anfahren der Anlage als auch im Normalbetrieb gesichert.

In der Zeichnung ist ein Ausführungsbeispiel des Erfindungsgegenstandes vereinfacht dargestellt.

Es zeigen :

Figur 1 einen Wasserabscheider im Längsschnitt ;

Figur 2 einen Querschnitt nach Linie A-A in Figur 1 ;

Figur 3 Umlenkschaufeln im vergrösserten Massstab ;

Figur 4 Detail C nach Figur 3 ;

Figur 5 Detail B nach Figur 1 ;

Figur 6 Ansicht E nach Figur 3 ;

Figur 7 einen Teilschnitt nach Linie D-D in Figur 3.

Gleiche Teile sind in allen Figuren mit denselben Bezugszahlen versehen. Die Strömungsrichtungen der Arbeitsmittel sind mit Pfeilen bezeichnet. Erfindungsunwesentliche Teile wie beispielsweise Versteifungsrippen und Abstützungselemente sowie die örtliche Anordnung des Wasserabscheiders in der Dampfturbinenanlage sind fortgelassen. In der Regel sind solche Wasserabscheider zwischen Hoch- und Niederdruckteilen von nuklearen Dampfturbinen angeordnet.

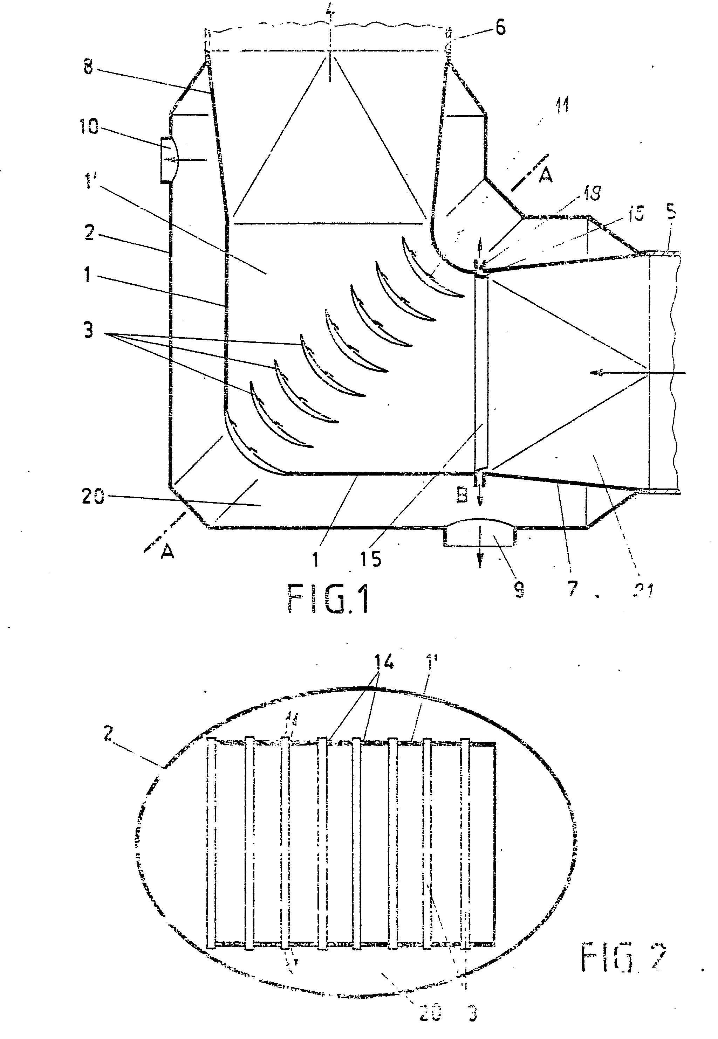

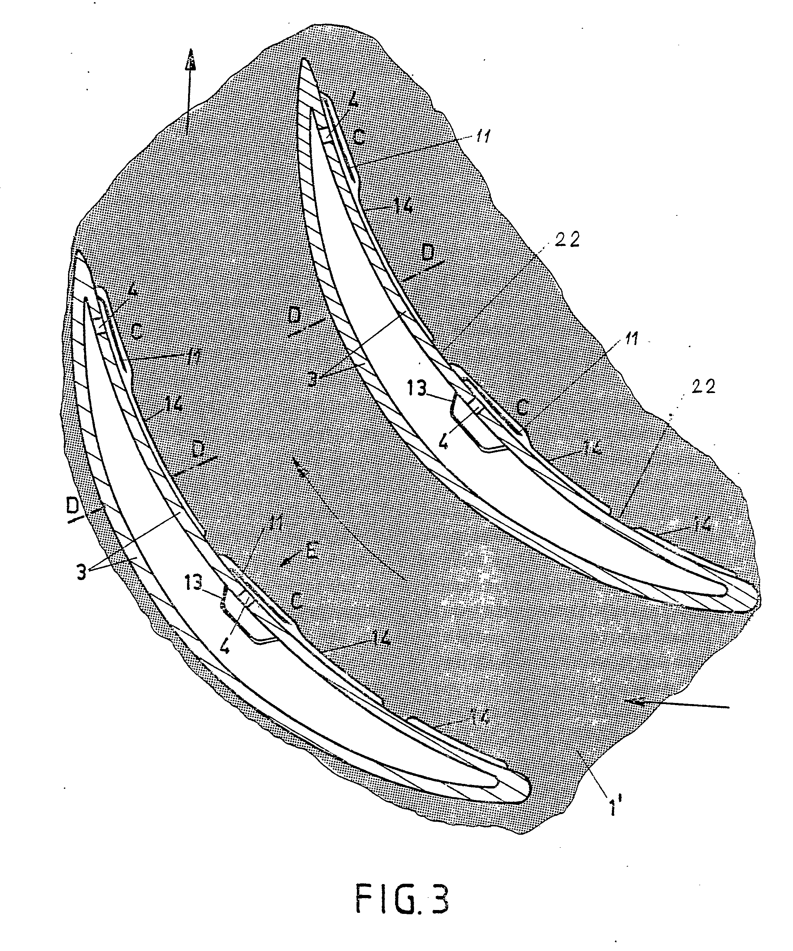

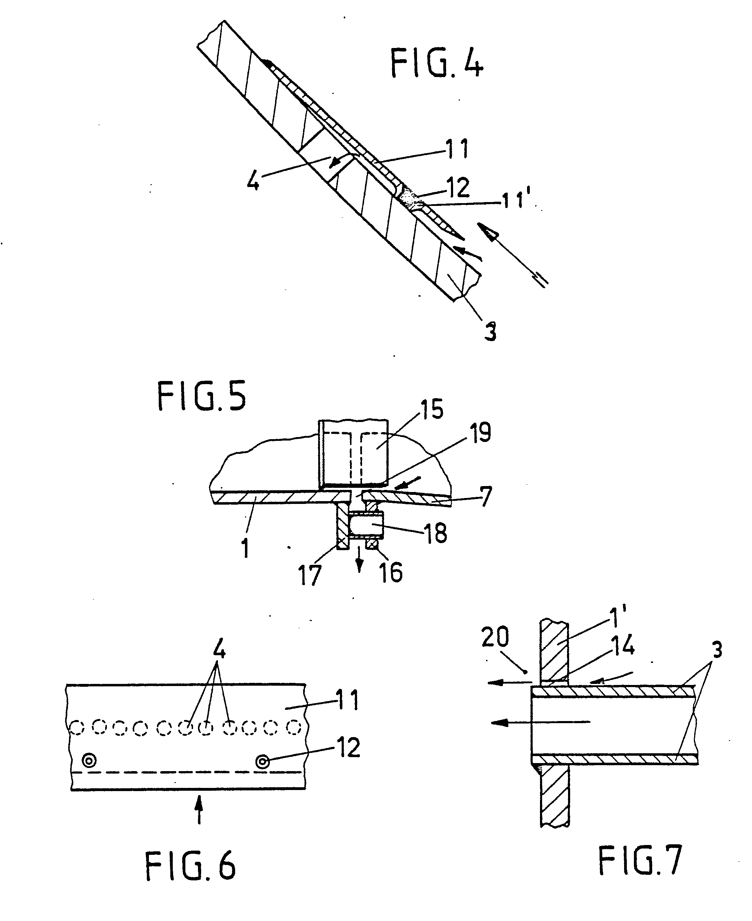

Dem in Figur 1 dargestellten Wasserabscheider strömt das Arbeitsmittel, im vorliegenden Fall Nassdampf über eine horizontal angeordnete Dampfeintrittsleitung 5 zu und verlässt ihn vertikal aufwärts durch die Dampfaustrittsleitung 6. Der Wasserabscheider besteht im wesentlichen aus einem Rohrkniestück 1, in dessen Knickebene eine Reihe hohler Umlenkschaufeln 3 angeordnet ist. In bekannter Weise sind die Schaufeln über den durchströmten Querschnitt gleichmässig gestaffelt. Sie weisen ein strömungsgünstiges Schaufelprofil auf und sind für 90° Umlenkung ausgelegt. Das Rohrkniestück ist von einem Aussengehäuse 2 umgeben, in dessen tiefstem Teil ein Wasserablaufstutzen 9 angeordnet ist. Die hohlen Umlenkschaufeln sind an ihrer konkaven Seite in der Schaufelmitte und nahe der Austrittskanten mit Oeffnungen 4 (Figur 3) zum Absaugen des an den Schaufeln abgeschiedenen Wassers versehen. Die Oeffnungen 4 sind durch das hohle Schaufelinnere mit dem vom Aussengehäuse 2 und Rohrkniestück 1 eingeschlossenen Zwischenraum 20 verbunden. Hierzu sind die Stirnseiten der in den Zwischenraum 20 hineinragenden Schaufeln 3 offen, wie dies aus Figur 7 ersichtlich ist.

Der Zwischenraum 20 ist derart ausgebildet, dass eine Trennung der flüssigen von der dampfförmigen Phase der abgesaugten Wasser-Dampfmischung unter dem Einfluss der Schwerkraft stattfindet. Der zur Absaugung des Wassers erforderliche relative Unterdruck im hohlen Schaufelinnern und im Zwischenraum 20 wird dadurch erzielt, dass ein Abdampfstutzen 10 mit einer hierzu geeigneten Stelle niederen Druckes der Dampfturbinenanlage verbunden ist. Das erforderlich Druckgefälle zwischen Strömungskanal 21 und Zwischenraum 20 kann infolge seiner Abhängigkeit von allzu zahlreichen Parametern hier nicht angeführt werden ; indes ist es vom Fachmann ohne weiteres zu bestimmen. Der Abdampfstutzen 10, über den der vom abgesaugten Wasser abgeschiedene Dampfanteil abgeführt wird, ist im Gegensatz zum Wasserablaufstutzen 9 möglichst weit oben am Aussengehäuse 2 angeordnet.

Ein Querschnitt des Wasserabscheiders durch die Knickebene ist in Figur 2 dargestellt. Die planparalle Anordnung der Seitenwände 1' des Rohrkniestückes 1 ermöglicht eine einfache Ausführung des Schaufelregisters, da alle Umlenkschaufeln 3 gleich lang sind.

Aus strömungs- und herstellungstechnischen Gründen ist der Strömungsquerschnitt im Bereich der Umlenkschaufeln viereckig. Deswegen sind Uebergangsstücke 7 und 8 zur Anpassung des Strömungsquerschnittes vorgesehen.

Der Nassdampf strömt durch das Uebergangsstück 7, in welchem der Strömungsquerschnitt von in der Regel runder Form in rechteckige Form übergeht, in das Rohrkniestück 1 hinein, wo er unter der Wirkung der Umlenkschaufeln 3 nach oben umgelenkt wird. Wegen der Aenderung der Strömungsrichtung scheiden sich unter der Wirkung der Fliehkräfte die Wassertropfen aus dem Nassdampfstrom auf die konkave Schaufeloberfläche ab. Durch das Uebergangsstück 8, in welchem der Strömungsquerschnitt von rechteckiger Form in die runde Form übergeht, verlässt der Dampfstrom, nunmehr wesentlich abgetrocknet, den Wasserabscheider und strömt durch die Dampfaustrittsleitung 6 in Richtung Dampfturbine.

Ein Querschnitt durch zwei Umlenkschaufeln 3 mit angrenzender Seitenwand 1' des Rohrkniestückes 1 ist in Figur 3 dargestellt. Die konkave Seite der Umlenkschaufel 3 ist an zwei Stellen mit Absaugöffnungen 4 versehen, und zwar zum einen etwa in der Schaufelmitte und zum anderen nahe der Austrittskante. Bei den Oeffnungen 4 handelt es sich um runde Bohrungen, die eng nebeneinander über der ganzen Schaufellänge angeordnet sind und somit jeweils quer zur Strömungsrichtung eine Reihe bilden (Figur 6).

Diese Oeffnungsreihen 4 sind nun mit je einem sich über die ganze Reihe erstreckenden Deckband 11 versehen. Das Deckband 11 weist in der Ebene der Oeffnungen 4 und stromaufwärts der Oeffnungen 4 einen Abstand zur Schaufeloberfläche auf. Stromabwärts der Oeffnungen 4 ist das Deckband 11 mit der Schaufeloberfläche wasserdicht verbunden beispielsweise durch Schweissung.

Im Deckband 11 sind mehrere, über die Deckbandlänge gleichmässig verteilte Löcher mit einem zur Schaufeloberfläche vorspringendem Rand 11' herausgestanzt. Dieser Rand sichert einerseits den Abstand zwischen dem Deckband 11 und der konkaven Seite der Umlenkschaufel 3 und eignet sich andererseits als Punktschweissstelle 12 für die Befestigung des Deckbandes 11 an der Schaufel 3 (Figur 4 und 6). Im Schaufelinnern ist an der konkaven Schaufelseite unterhalb der sich in der Schaufelmitte befindenden Absaugöffnungen ein Leitblech 13 angeordnet. Dieses Leitblech 13 verhindert eine Kollision der aus dem mittleren und dem hinteren Schaufelteil abgesaugten Wasserströme. Der an der konkaven Schaufelseite gebildete Wasserfilm fliesst infolge der Abstreifwirkung in Strömungsrichtung des Dampfes in den Spalt zwischen dem Deckband 11 und Umlenkschaufel 3 und sammelt sich dort. Um optimale Einströmbedingungen für das Wasser zu schaffen und um der Hauptströmung möglichst wenig Widerstand zu bieten, ist die Einströmkante des Deckbandes profiliert ; im vorliegenden Fall ist die Kante gemäss Figur 4 angeschärft. Es ist nicht zu vermeiden, dass mit dem durch die Oeffnungen 4 abgesaugten Wasser auch eine bestimmte Menge Dampf abgeführt wird. Dieser sogenannte Transportdampf wird im Zwischenraum 20 vom Wasser abgetrennt und im oberen Teil des Zwischenraumes 20 gesammelt, von wo er durch den Abdampfstutzen 10 abgeführt und vorzugsweise in einem Regenerativ-Vorwärmer weiter verwendet wird.

Innerhalb des Rohrkniestückes 1 entstehen im Wasserfilm unter dem Einfluss der Grenzschicht an den Seitenwänden 1' in der Nähe der beiden seitlichen Befestigungsstellen der Schaufeln, Druckgradienten und demzufolge Geschwindigkeitskomponenten quer zur Hauptstromrichtung. Das durch die Sekundärströmung in den Ecken zwischen der konkaven Schaufeloberfläche und den Seitenwänden sich ansammelnde Wasser stellt eine lokale Verdickung des Wasserfilmes dar. Damit besteht die Gefahr, dass dieses Wasser mit dem Dampfstrom mitgerissen wird.

Um nun auch dieses Wasser abzuscheiden, werden in den Seitenwänden 1' Oeffnungen vorgesehen, die zum Zwischenraum 20 hin offen sind. Diese Oeffnungen befinden sich unmittelbar oberhalb der konkaven Schaufelseite und sind in ihrer Gestaltung der Schaufelform nachgebildet, d. h. sie folgen ebenfalls der Kontur der Deckbänder 11, wie dies aus Figur 3 ersichtlich ist.

Aus Herstellungsgründen hat es sich als günstig erwiesen, wenn diese Seitenöffnungen, die sich in ihrer Ausdehnung in Strömungsrichtung annähernd von der Schaufelspitze bis zur Schaufelaustrittskante erstrecken, durch mehrere Stege 22 in eine Mehrzahl eigentlicher Seitenspalte 14 unterteilen. An den Stegen kann die konkave Wandung der Schaufeln durch Schweissung mit der Seitenwand 1' verbunden werden.

Wie in Figur 7 und schematisch in Figur 2 gezeigt, wird das in den Ecken gesammelte Wasser nun durch diese Seitenspalte 14 abgesaugt. Zusammen mit dem aus dem Schaufelinneren abgesaugten Wasser wird es im tiefsten Teil des Zwischenraumes 20 gesammelt und dann durch den Wasserablaufstutzen 9 abgeführt.

Stromaufwärts der Umlenkschaufeln 3 ist im Strömungskanal 21 ein Schwallwasserabscheider angeordnet, der im wesentlichen aus einem Radialspalt 19 und einer Deckplatte 15 besteht.

Dieser sogenannte Vorabscheider, der zwischen dem Eintrittsübergangsstück 7 und dem Rohrkniestück 1 angeordnet ist, ist als Detail B nach ·Figur 1 in Figur 5 dargestellt. Der Radialspalt 19 ist über dem ganzen Umfang des Strömungskanals mit einer in den Strömungskanal 21 hineinragenden Deckplatte 15 überlappt. Die Deckplatte 15 ist stromabwärts des Spaltes 14 dampfdicht mit dem Rohrkniestück 1 verbunden, beispielsweise durch Schweissung. Dieser Vorabscheider sichert die Abscheidung von dem an den Wänden des Eintrittsübergangsstückes 7 fliessenden Schwallwassers und bewirkt dadurch eine gleichmässige Beaufschlagung und somit Nässeverteilung an den weiter stromabwärts angeordneten Umlenkschaufeln 3.

Um einen gleichmässigen Abstand zwischen der Deckplatte 15 und dem Eintrittsübergangsstück 7 zu erreichen, wird das Uebergangsstück 7 gegenüber dem Rohrkniestück 1 bei der Montage zentriert. Zentrierrohre 18, über die der Flansch ·16 des Uebergangsstückes 7 verschiebbar angeordnet ist, werden hierzu mit dem Flansch 17 des Rohrkniestückes 1 verschweisst. Auf diese Weise ist eine Verbindung geschaffen, die die Kompensation der Axialdehnung des horizontalen Teils des Rohrkniestückes 1 ermöglicht.

Nebst dem dargestellten und beschriebenen Wasserabscheider sind selbstverständlich zahlreiche andere Umlenkungsvarianten denkbar, die aber alle auf analoge Weise ausgelegt werden. Die erwähnten Varianten unterscheiden sich voneinander nur durch die Anordnung von Wasserablauf- und Abdampfstutzen, wobei der Wasserablaufstutzen immer im tiefsten Teil und der Abdampfstutzen im oberen Teil des Zwischenraumes 20 angeordnet werden.

Selbstverständlich umfasst die Erfindung auch Rohrkniestücke mit beliebigem Querschnitt und mit einem Knickwinkel, der grösser oder kleiner als die gezeigten 90° ist. Ferner sind Ausführungen denkbar, bei denen in einem Rohrkniestück mehrere Reihen von Umlenkschaufeln vorgesehen sind. Auch die Anzahl von Oeffnungsreihen pro Schaufel unterliegt selbstverständlich der Optimierung.

Der Abscheidegrad des Apparates wird durch den Wassergehalt im Nassdampf hinter und vor dem Wasserabscheider definiert. Die Wirtschaftlichkeit des Apparates wird als Verhältnis der abgeschiedenen Wassermenge zur Transportdampfmenge definiert.

Aus diesen Ueberlegungen heraus sind die Absaugöffnungen 4, der Abstand der Deckplatte 15 resp. des Deckbandes 11 zur benachbarten Wandung und die Spalte 14 resp. 19 zu dimensionieren, wobei angestrebt wird, mit minimalem Transportdampf jede Stelle entlang der Schaufeln und der Wände gleichmässig zu entwässern. Es versteht sich, dass der Transportdampf und das abgeschiedene Wasser in den Dampf-Wasser-Kreislauf der Anlage zurückgeführt werden, wobei die hierfür vorgesehenen Anschlussstellen nach dem Kriterium minimaler Wärmeverluste ausgewählt werden.

## Patentansprüche

1. Hochgeschwindigkeits-Wasserabscheider in einer Dampfturbinenanlage, im wesentlichen bestehend aus einem zwischen einer Zuströmleitung (5) und einer Abströmleitung (6) angeordneten Rohrkniestück (1), das in seiner Knickebene eine Anzahl gestaffelter hohler Umlenkschaufeln (3) mit gekrümmtem Profil aufweist, die an ihrer konkaven Seite Oeffnungen (4) aufweisen und deren hohles Schaufelinnere mit einem das Rohrkniestück umgebenden Zwischenraum (20) verbunden, welcher an eine Zone niedrigeren Druckes in der Anlage angeschlossen ist, dadurch gekennzeichnet, dass die Oeffnungen (4) reihenweise quer zur Strömungsrichtung angeordnete Bohrungen sind und mit einem sich über die ganze Reihe erstreckenden Deckband (11) versehen sind, welches in der Ebene der Oeffnungen (4) und stromaufwärts der Oeffnungen (4) einen Abstand zur Schaufeloberfläche aufweist und welches stromabwärts der Oeffnungen (4) mit der Schaufeloberfläche dampfdicht verbunden ist.

2. Hochgeschwindigkeits-Wasserabscheider nach Anspruch 1, dadurch gekennzeichnet, dass das Deckband (11) an seiner Zuströmseite profiliert ist.

3. Hochgeschwindigkeits-Wasserabscheider nach einem der vorhergehenden Ansprüche, dadurch gekennzeichnet, dass an den Verbindungsstellen der Umlenkschaufeln (3) mit den Seitenwänden (1') des Rohrkniestückes (1) in den Seitenwänden (1') eine Mehrzahl von Seitenspalten (14) unmittelbar oberhalb der konkaven Schaufelseite angeordnet ist.

4. Hochgeschwindigkeits-Wasserabscheider nach einem der vorhergehenden Ansprüche, dadurch gekennzeichnet, dass stromaufwärts der Umlenkschaufeln (3) in den Wandungen des Rohrkniestückes (1) ein durchgehender Spalt (19) vorgesehen ist, welcher mit einer in den Strömungskanal (21) hineinragenden Deckplatte (15) überlappt ist, wobei die Deckplatte (15) stromabwärts des Spaltes (14) dampfdicht mit dem Rohrkniestück verbunden ist.

## Claims

1. High-velocity water separator in a steam turbine installation, consisting essentially of a ·

pipe elbow piece (1) located between an inlet pipe (5) and an outlet pipe (6), which elbow piece has a number of staggered hollow deflector vanes (3) with a curved profile in the elbow plane, which vanes have openings (4) on their concave sides and the hollow insides of the vanes are connected to an intermediate space (20) surrounding the pipe elbow piece, which intermediate space is connected to a zone of lower pressure in the installation, characterised in that the openings (4) are holes located in rows transverse to the flow direction and are provided with a cover strip (11) extending over the complete row, which cover strip is at a distance from the surface of the vane in the plane of the openings (4) and upstream of the openings (4) and which cover strip has a steam-tight connection to the surface of the vane downstream of the openings (4).

2. High-velocity water separator according to Claim 1, characterised in that the cover strip (11) is profited on the inlet flow side.

3. High-velocity water separator according to on of the preceding claims, characterised in that a multiplicity of side slots (14) are located in the side walls (1') directly above the concave vane side at the junction points of the deflection vanes (3) and the side walls (1') of the pipe elbow piece (1).

4. High-velocity water separator according to one of the preceding claims, characterised in that a throughslot (19) is provided in the walls of the pipe elbow piece (1) upstream of the deflection vanes (3), which through-slot is overlapped by a cover plate (15) protruding into the flow duct (21), the cover plate (15) having a steam-tight connection to the pipe elbow piece downstream of the slot (14).

**Revendications**

1. Séparateur d'eau à haute vitesse dans une installation de turbine à vapeur, composé essentiellement d'un coude tubulaire (1) disposé entre une conduite d'admission (5) et une conduite d'échapement (6), qui comporte dans son plan de cintrage une pluralité d'aubes de déviation (3) creuses étagées à profil courbe, qui présentent des ouvertures (4) à leur face concave et dont la partie intérieure creuse communique avec une chambre intermédiaire (20) entourant le coude tubulaire et raccordée à une zone de moindre pression dans l'installation, caractérisé en ce que les ouvertures (4) sont des alésages alignés transversalement par rapport à la direction de l'écoulement et sont pourvus d'une bande de recouvrement (11) s'étendant au-dessus de la ligne entière bande qui, dans le plan des ouvertures (4) et en amont des ouvertures (4), est située à une certaine distance de la surface des aubes et qui, en aval des ouvertures (4), est assemblée de façon étanche à la vapeur à la surface des aubes.

2. Séparateur d'eau à haute vitesse suivant la revendication 1, caractérisé en ce que la bande de recouvrement (11) est profilée du côté de l'admission.

3. Séparateur d'eau à haute vitesse suivant l'une des revendications précédentes, caractérisé en ce qu'aux endroits d'assemblage des aubes de déviation (3) avec les parois latérales (1') du coude tubulaire (1) il est prévu dans les parois latérales (1') une pluralité de fentes latérales (14) immédiatement au-dessus de la face concave de l'aube.

4. Séparateur d'eau à haute vitesse suivant l'une des revendications précédentes, caractérisé en ce qu'en amont des aubes de déviation (3), il est prévu dans les parois du coude tubulaire (1) une fente (19) ininterrompue qui est couverte d'une plaque de recouvrement (15) pénétrant dans le canal d'admission (21), cette plaque de recouvrement (15) étant assemblée de façon étanche à la vapeur avec le coude tubulaire, en aval de la fente (19).

FIG.1

FIG.2

FIG. 3

FIG. 4

11
4
12
11'
3

FIG. 5

15
19
7
18
1
17
16

4

11
12

FIG. 6

20
1'
14
3

FIG. 7